# EUROPEAN PATENT SPECIFICATION

(11) **EP 4 231 537 B1**
(45) Date of publication and mention of the grant of the patent: **03.07.2024**
(21) Application number: 22157471.8
(22) Date of filing: 18.02.2022
(51) Int. Cl.: H04B 3/30

(54) **APPARATUS AND METHOD FOR PREVENTING ALTERATIONS AND DISTORTIONS IN HIGH FIDELITY AND HIGH FIDELITY HIGH END AUDIO AND/OR VIDEO REPRODUCTION**
VORRICHTUNG UND VERFAHREN ZUR VERHINDERUNG VON VERÄNDERUNGEN UND STÖRUNGEN BEI DER HIGH FIDELITY UND HIGH FIDELITY HIGH END AUDIO UND/ODER VIDEO WIEDERGABE
APPAREIL ET PROCÉDÉ PERMETTANT D'ÉVITER LES ALTÉRATIONS ET LES DISTORSIONS DANS LA REPRODUCTION AUDIO ET/OU VIDÉO HAUTE FIDÉLITÉ ET HAUTE FIDÉLITÉ HIGH END

(43) Date of publication of application: 23.08.2023
(73) Proprietor: Ingelva S.r.l., 21013 Gallarate (Varese) (IT)
(72) Inventor: DE BERNARDI, Davide, 21013 Gallarate (Varese) (IT)
(74) Representative: Anselmi, Davide

(56) References cited:
- US-A1- 2010 194 497

## Description

### TECHNICAL FIELD

The present invention relates to an apparatus and a method for preventing alterations and distortions in High Fidelity (Hi-Fi) and High Fidelity High End (Hi-Fi High End) audio and/or video reproduction of audio and/or video apparatuses and systems powered at low voltage or at very low voltage, in alternating current or in direct current.

The term "low voltage" refers to nominal operating voltages of the electrical power supply system comprised between 50 V and 1000 V in alternating current, and between 120 V and 1500 V in direct current.

The term "very low voltage" refers to nominal operating voltages of the electrical power supply system less than 50 V in alternating current, and less than 120 V in direct current.

In particular, the present invention can be used in a therapeutic audio and/or video environment (music therapy and/or chromotherapy) and similar or assimilable ones and in proximal systems, such as by way of non-limiting example without exhausting them: biomedical resonance, electrical, electrovisual, electroacoustic, electrotherapy parameter measurement, and similar and assimilable systems.

In particular, the apparatus is designed to be connected to the electrical power supply system at low or very low voltage, both in direct current and in alternating current (single-phase or polyphase), immediately upstream and by derivation of the power supply inputs (in) of the audio and/or video reproduction apparatuses and systems, of the electrical and electronic user apparatuses and systems; immediately upstream and by derivation of the main switches of the electrical panels; immediately downstream and by derivation of the delivery point of the Supplying entity's electricity, of the telephone/data lines of the Telephone Service Entity and, finally, by derivation to the conductors and equally distributed along distinct sections of the electrical power supply system and with pre-established pitches depending on whether the aforesaid sections are indoor or outdoor.

Even more in detail, the apparatus is used for electrical power supply systems at low voltage or at very low voltage in single-phase or polyphase alternating current at industrial frequencies of 25, 45, 50, 60 Hz, depending on the distribution lines (and in any case adaptable to other frequencies of the power supply lines) by connection to the conductor(s) of the electrical power supply system at low voltage or at very low voltage and to the grounding system, as described below.

### PRIOR ART

As is well known in the field of High Fidelity (Hi-Fi) and High Fidelity High End (Hi-Fi High End) audio and/or video reproduction, today increasingly higher audio and/or video reproduction performance is required in order to try to achieve as much fidelity as possible to the original multimedia contents.

In particular, the intention that the manufacturers of such apparatuses continuously pursue, without nonetheless completely solving the problem with the known devices available to date, is to try to eliminate any disturbance phenomenon in terms of reproduction alteration and distortion by usually operating downstream of the power supply and, in particular, between the latter and the sound emission or video reproduction device, for example by operating at the speakers, at the audio signal amplifier, or at the graphic display screen or the electronic unit that manages the audio/video signals and the transmission thereof.

These known devices and techniques bring along several drawbacks that generally originate from an approach to incident phenomena which is only selective (atomistic) to the detriment of the observer's approach, which is also overall, to them and, more rarely, when the approach is also overall, said phenomena are only in part detected, considered and treated in the complexity of the synergistic effects by the observer, with the consequent result that the current devices and the application methods thereof show, with all evidence, that they are not able to completely solve the problem.

In particular, below and as a hint, some of the main disturbance phenomena are reported, without exhausting them.

Especially since all the aforesaid disturbance phenomena originate from electromagnetic stresses that are external and internal to the electricity transport and distribution lines (Very High, High, Medium voltage power lines), to the electrical systems (circuits) at low and very low voltage and to the telephone/data service networks and lines. The term "external and internal" refers to any electromagnetic stress, such as impacts and natural and artificial electrical vibrations (of electric charges); Natural: for example pulses also with steep front of cosmic-solar, atmospheric and terrestrial origin; Artificial: for example originating from satellite, radiotelevision, radioauditory, telephone/data broadcasters, civil and military radars; pulses produced by the operation of the power lines, alternating with higher frequencies than the fundamental one, especially at high frequency (the latter due to in-line manoeuvres and resonances: harmonics and spurious); pulses produced by the operation of industrial apparatuses interconnected to the power lines, such as arc furnaces, for example in the steel and metallurgical environment, and by power electronic apparatuses in the various sectors of industry, such as, for example, for the automation of the processes and energy conversion (alternating current into direct current).

Given the above, the main disturbance phenomena of the audio and/or video reproduction apparatuses and systems are summarised below:
- disturbance phenomena that propagate from the power lines and from the telephone/data networks and, in cascade, as far as the electrical system (circuit) at low and very low voltage, to the telephone/data line of the End User and to the connected electrical user apparatuses in general, including, in particular, the audio and/or video reproduction apparatuses/systems and similar, assimilable and related (proximal) ones;
- electromagnetic (e.m.) disturbance phenomena produced by the electrical user devices that should be considered and resolved by the Manufacturers of the same electrical user apparatuses, as also prescribed by the Law (starting from the EEC Directive 89/336 "EMC"-Electromagnetic Compatibility- of origin, today EMC Directive 2014/30/EU, in force since April 2016 and subsequent amendments and additions, transposed into the national laws of EU member countries, in Italy by Legislative Decree 80/2016 of 18.05.2016: e.m. neutrality and immunity of the electrical user apparatuses and the accessories thereof);
- environmental and local e.m. disturbance phenomena, of various sources (primary and secondary) and form, all subject to analytical consideration specifically and in the overall complexity by this invention and to relative and exclusive functional resolution capacity also and above all in their synergistic complex - that is, resulting from the interactions of each primary and secondary source -, as defined above and which will be recalled in the continuation of this text.

Disadvantageously, these disturbance phenomena, the ones then end up into the audio and/or video apparatuses/systems immediately downstream, respectively of the input (in) of the electrical power supply and of the input (in) of the data line, the others interact directly by e.m., induction, resonance, positive (constructive) interference, from the high frequencies gradually to the lower ones, with single components of the apparatus, with part or with the apparatus as a whole, with part or with the audio/video system as a whole, in both cases negatively affecting the quality of the audio and/or video reproduction and, in the most severe cases, even the reliability and safety of the audio and/or video apparatuses and systems themselves and of the similar, assimilable and related (proximal) apparatuses and systems.

Some knowledge of prior art is described in document IT VA 950 008 filed by the same Applicant which discloses an apparatus for damping the overvoltage and for dissipating their energy in the electric lines.

### OBJECTS OF THE PRESENT INVENTION

In this situation, the object of the present invention is to realize an apparatus and a method for preventing alterations and distortions in High Fidelity (Hi-Fi) and High Fidelity High End (Hi-Fi High End) audio and/or video reproduction of apparatuses powered at low voltage or at very low voltage, in alternating current or in direct current, which remedies the aforesaid drawbacks.

It is in particular the object of the present invention to realize an apparatus and a method for preventing alterations and distortions in High Fidelity (Hi-Fi) and High Fidelity High End (Hi-Fi High End) audio and/or video reproduction that makes it possible to prevent alterations and distortions in the audio and/or video reproduction of the apparatuses, but also for the electrical power supply systems themselves, and, in general, for people and property (safety and health of people and safety and health of architectural facilities and related technical systems, aggravated by possible consequent fires and/or explosions).

The stated objects are substantially achieved by an apparatus and a method for preventing alterations and distortions in High Fidelity (Hi-Fi) and High Fidelity High End (Hi-Fi High End) audio and/or video reproduction as described in the accompanying claims.

### BRIEF DESCRIPTION OF THE FIGURES

Further characteristics and advantages of the present invention will more greatly emerge from the detailed description of some preferred but not exclusive embodiments and materials of an apparatus and method for preventing alterations and distortions in audio and/or video reproduction illustrated in the appended drawings, in which:
- figure 1a illustrates, in axonometric view from below, the internal core shown without the relative casing, for the mere purpose of identification and description, of a first embodiment of the apparatus according to the present invention;
- figure 1b illustrates, in axonometric view from above, the apparatus of figure 1a;
- figure 1c illustrates, in front view, the apparatus of figure 1a;
- figure 1d illustrates, in section according to plane A-A, the apparatus of figure 1a;
- figure 2a illustrates, in axonometric view from below, the internal core fitted in a dedicated casing of dielectric material (preferably a sheath) of said first embodiment of the apparatus according to the present invention;
- figure 2b illustrates, in axonometric view from above, the apparatus of figure 2a;
- figure 2c illustrates, in front view, the apparatus of figure 2a;
- figure 2d illustrates, in section according to plane A-A, the apparatus of figure 2c;
- figure 3a illustrates, in axonometric view from above, the external casing and the base of the latter in said first embodiment of the apparatus according to the present invention;
- figure 3b illustrates the external casing of figure 3a with discoidal plate removed from the cover in order to display the parts below;
- figure 3c illustrates, in front view, the apparatus of figure 3a;
- figure 3d illustrates, in section according to plane A-A, the apparatus of figure 3c;
- figures 4a-4d illustrate, in views corresponding to views 1a-1d, the internal core, without the relative casing, for the purpose of identification and description, of a second embodiment of the enhanced apparatus according to the present invention;
- figures 5a-5d illustrate, in views corresponding to views 2a-2d, the internal core fitted in a dedicated casing of dielectric material (preferably a sheath) of said second embodiment of the apparatus according to the present invention;
- figures 6a-6d illustrate, in views corresponding to views 3a-3d, the external casing and the base of the latter in said second embodiment of the apparatus according to the present invention;
- figures 7a-7d illustrate, in views corresponding to views 1a-1d, the internal core of a third embodiment of the apparatus according to the present invention; figure 7e illustrates a further section of the apparatus of figure 7c according to a section plane A-A;
- figures 8a-8d illustrate, in views corresponding to views 3a-3d, the external casing and the base of the latter in said third embodiment of the apparatus according to the present invention;
- figures 9a-9e illustrate, in views corresponding to views 7a-7e, the internal core of a fourth embodiment of the enhanced apparatus according to the present invention; figure 9f illustrates a further section of the apparatus of figure 9c according to a section plane C-C;
- figures 10a-10d illustrate, in views corresponding to views 3a-3d, the external casing and the base of said fourth embodiment of the apparatus according to the present invention.

### DETAILED DESCRIPTION OF ONE OR MORE PREFERRED EMBODIMENTS OF THE PRESENT INVENTION

With reference to the aforesaid figures, an apparatus for preventing audio and/or video alterations and distortions with origin external and internal to the electrical power supply systems 100 at low or very low voltage in alternating or direct current has been globally indicated with reference number 1.

The apparatus 1 subject-matter of the present invention is designed to be connected by derivation to the electrical power supply system 100 preferably in proximity to the audio/video reproduction apparatus (powered by the same electrical power supply system 100) according to various configurations that will be presented in the continuation of the present description.

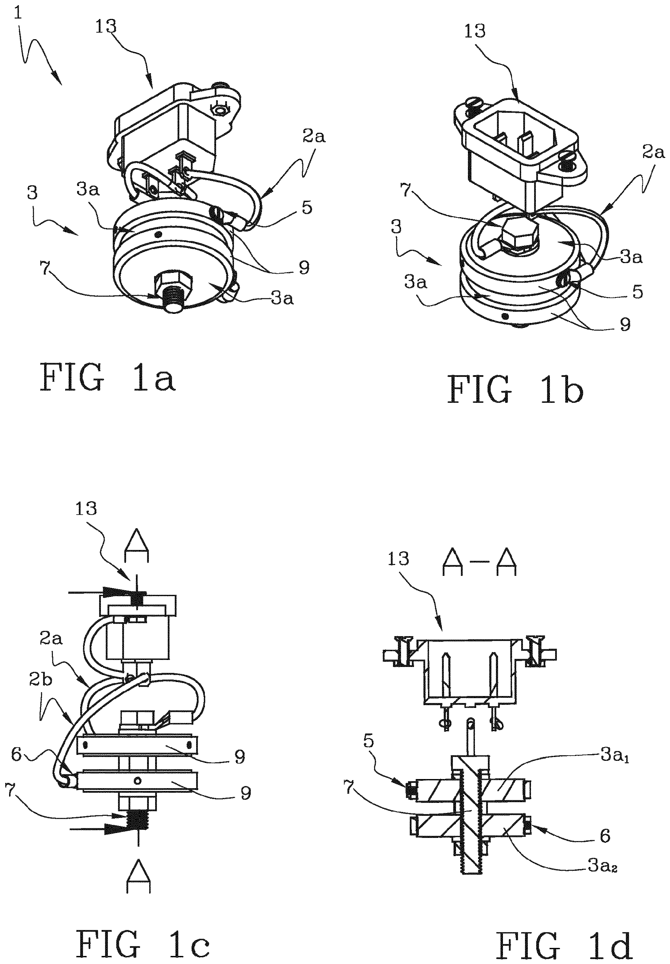

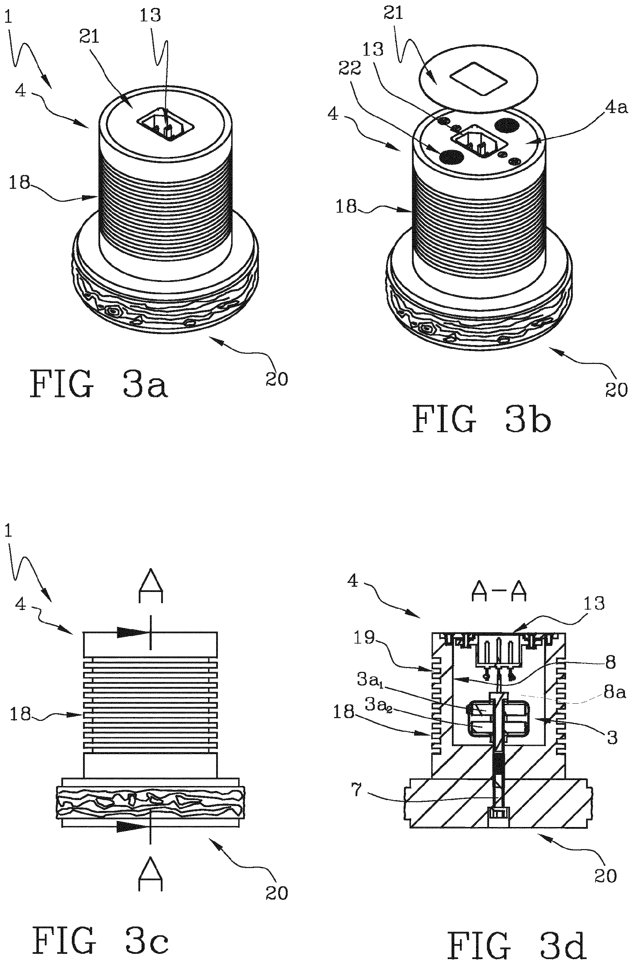

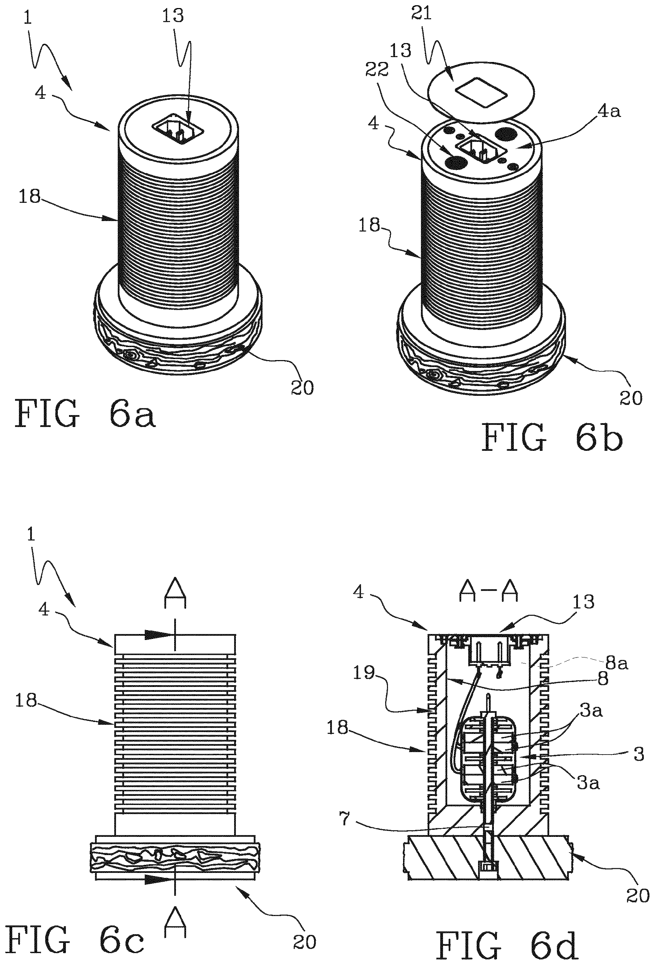

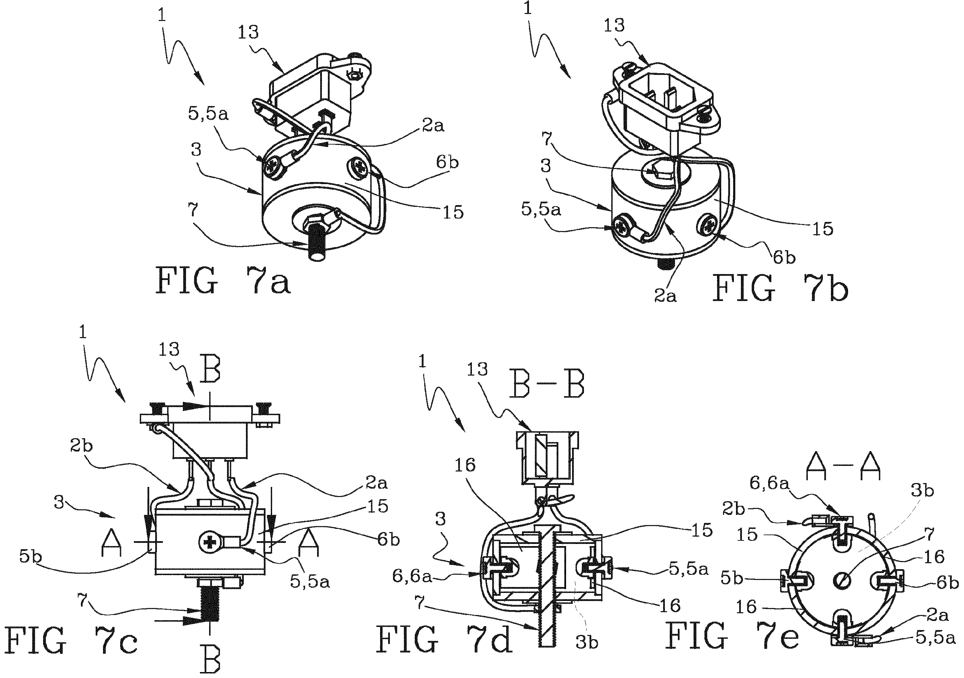

As regards the apparatus 1, it comprises at least one Phase input (in) 2a and one Neutral input (in) 2b, in use, connected by derivation to a Phase and to the respective Neutral of the electrical power supply system 100 to receive an electrical voltage signal (low or very low as defined above). The apparatus 1 further comprises an external casing 4 internally presenting a containment compartment in which an internal tuner-damper core 3 is inserted which comprises a mixture 3a, 3b of particles of piezoelectric, pyroelectric material, possibly integrated by semiconductor(s) and/or refractory inert(s), in air, each of various particle sizes and as many various reciprocal volumetric percentages as possible. Said internal tuner-damper 3 is configured in two alternative embodiment variants, as a function of the form of the aforesaid mixture, which will be better exposed later, but which are anticipated below:
- a first embodiment variant comprises the aforesaid mixture (indicated by number 3a) made in the form of consolidated, non-hygroscopic sediment, preferably cylindrical tablet type, visible in figures 1a to 6d;
- a second embodiment variant comprises the aforesaid mixture (indicated by number 3b) made in the form of incoherent (dissolved, i.e. not consolidated), non-hygroscopic sediment, visible in figures 7a to 10d.

In each variant, the mixture 3a, 3b is made and configured to detect and transform the electromagnetic energy at the origin of the disturbance phenomena, into mechanical energy and into thermal energy.

Said internal tuner-damper core 3 comprises a first polar electrode 5 and a second polar electrode 6 both partially inserted inside said mixture 3a, 3b and in contact therewith. Furthermore, said first and second polar electrodes 5, 6 are externally connected to a respective Phase input (in) 2a and Neutral input (in) 2b to receive said electrical voltage signal.

In addition, the internal tuner-damper core 3 comprises at least one bar 7, preferably metallic (for example a bolt), which is electrically and thermally conductive, with dual function:
- ground bias;
- heat dissipation.

Said bar 7 is at least partially immersed inside said mixture 3a, 3b, but spaced apart from said polar electrodes 5, 6 and connected, in use, to the grounding system 101.

In this way, the internal tuner-damper core 3 receives the electrical signal carried by the electrical power supply (and intended to power the audio/video apparatus) through the inputs (in) 2a, 2b respectively connected to the first and second polar electrodes 5, 6.

It should be noted that the external connections of the polar electrodes 5, 6 are isolated with respect to the external tuner-damper core 8 by a dielectric insulation.

In accordance with the present invention and as already mentioned, the apparatus 1 further comprises an external tuner-damper core 8 arranged in the containment compartment between the external casing 4 and the internal tuner-damper core 3.

In other words, the apparatus 1 according to the present invention comprises two tuner-damper cores: a main internal one 3 and a complementary external one 8. The internal tuner-damper core 3, implemented in various embodiments described below, is bordering and integrated with the external tuner-damper core 8 and is included by the latter.

The internal tuner-damper core 3 is fitted in a dedicated casing 12 of dielectric material (preferably in the form of a sheath) so as to make a first high-frequency (HF) chamber.

The external tuner-damper core 8 is bordering and integrated with the internal tuner-damper core 3 and enclosed by the external casing 4 (preferably made of metal) and by the relative cover 21 (also preferably made of metal) and determines a second high-frequency (HF) chamber.

The external tuner-damper core 8 comprises a mixture in the form of incoherent sediment 8a (dissolved, i.e. not consolidated), non-hygroscopic, of particles of piezoelectric, pyroelectric material, possibly integrated by semiconductor(s) and/or refractory inert(s), in air, each of various particle sizes and as many various reciprocal volumetric percentages as possible.

It should be noted that for both the internal 3 and external 8 tuner-damper cores, the mixture of non-hygroscopic sediment comprises piezoelectric, pyroelectric particles (such as: quartz, tourmalines, hemimorphites or the like) and possible semiconductor particles (such as silicon carbide and the like) and refractory inerts (such as: dolomitic, marble grit or the like). In the case of the internal core 3, depending on the embodiment thereof, the mixture may be of consolidated sediment 3a (in the form of a "tablet") or of incoherent sediment 3b (dissolved) such as the mixture 8a of the external core 8.

As already stated, each mixture is configured to transform the energy load of the external and internal electromagnetic stresses, which originate the disturbance phenomena, into mechanical energy (vibrations, consequent relative movements of the particles and consequent impacts of the particles) and into thermal energy (endogenous heat).

Preferably, but not necessarily, as mentioned above, this mixture is possibly integrated with semiconductors (such as silicon carbide and the like) with variable valence and refractory inerts which, adjusted together with the other essential particles of the mixture at different calibrations, help to prevent, absorb, dampen and dissipate the dangerous energy load of the disturbance phenomena present in the electrical system (circuit) at low and very low voltage, including possible data lines, and in the local environment in their proximity.

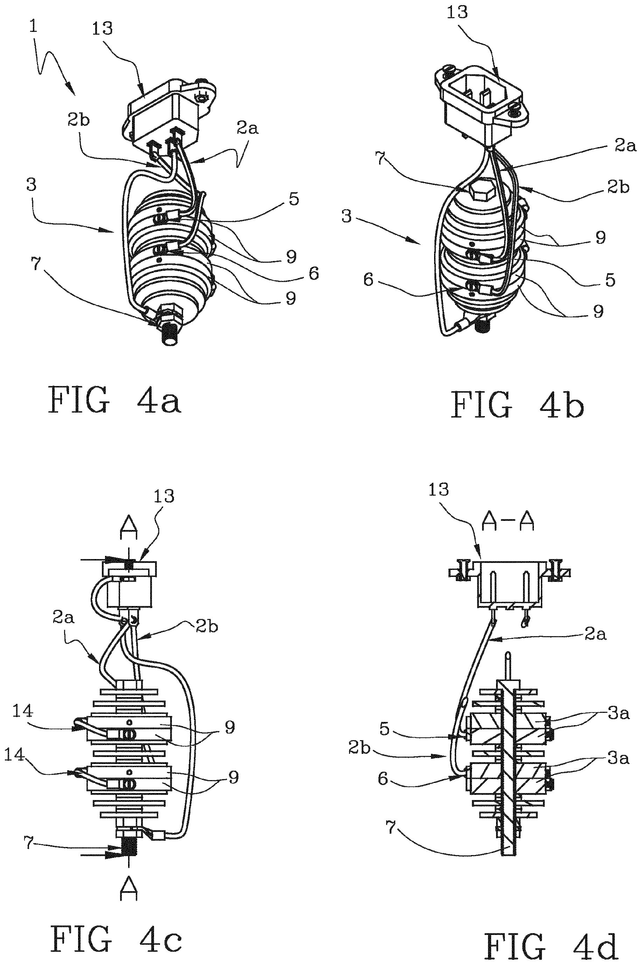

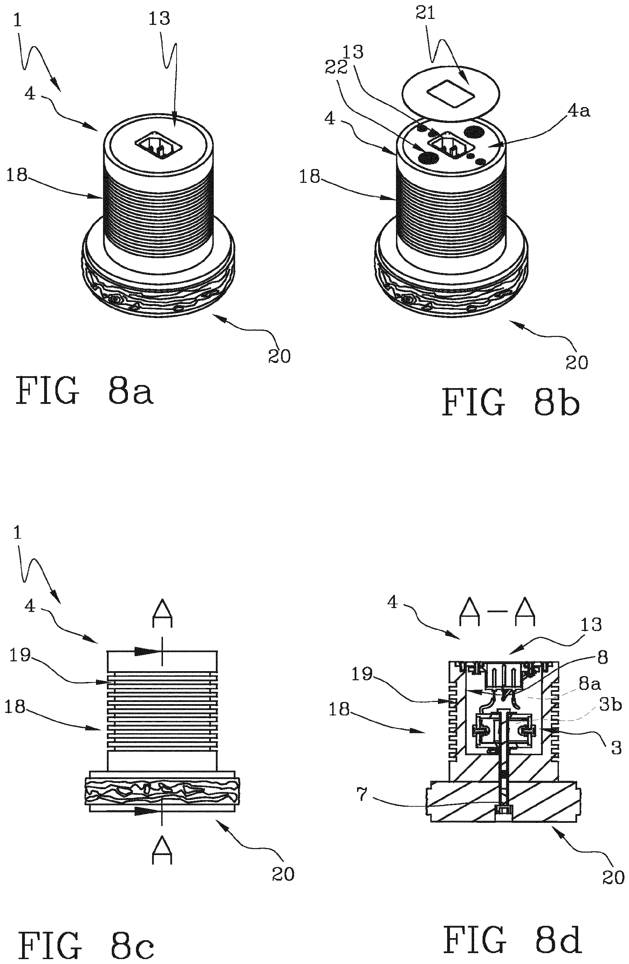

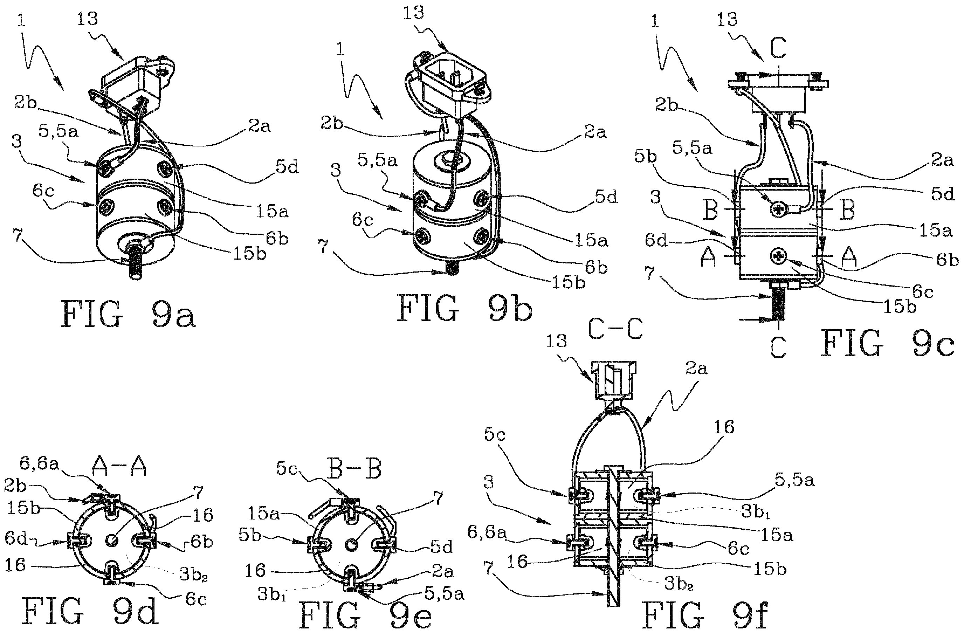

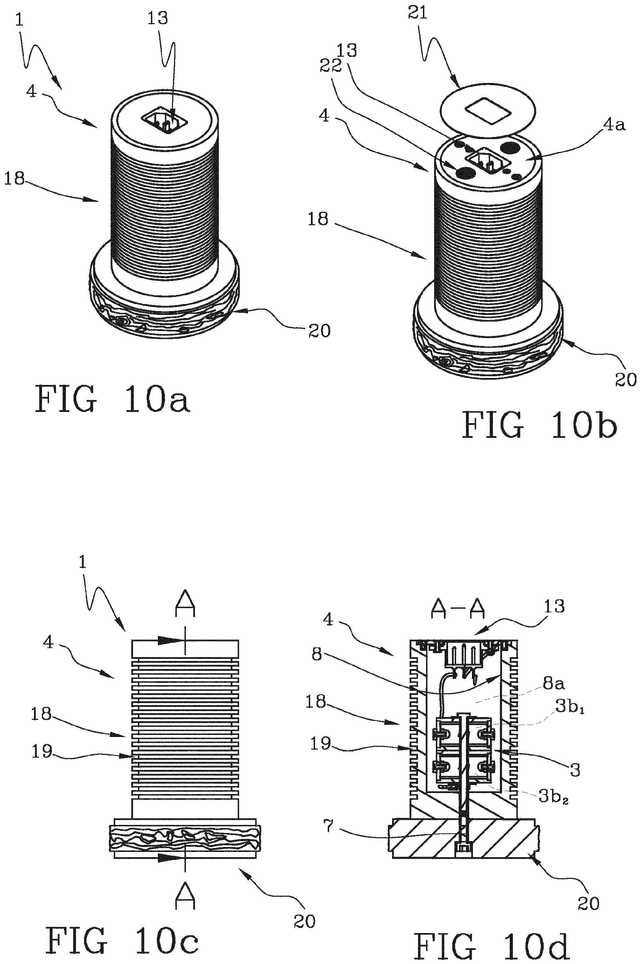

As already mentioned, the invention proposes several embodiments mainly concerning the configuration of the internal tuner-damper core 3 which are so named and represented in the figures:
- first embodiment -> internal tuner-damper core 3 made with a mixture in the form of consolidated sediment 3a (similar to a tablet) represented in figures 1a-1d (without sheath), 2a-2d (with sheath) and 3a-3d (inserted in the compartment delimited by the external casing 4);
- second embodiment -> internal tuner-damper core 3 made with a mixture in the form of consolidated sediment 3a (similar to a tablet), but which is enhanced as better explained below, represented in figures 4a-4d (without sheath), 5a-5d (with sheath) and 6a-6d (inserted in the compartment delimited by the external casing 4);
- third embodiment -> internal tuner-damper core 3 made with mixture in the form of incoherent sediment 3b (dissolved) represented in figures 7a-7d, and 8a-8d (inserted in the compartment delimited by the external casing 4);
- fourth embodiment -> internal tuner-damper core 3 made with mixture in the form of incoherent sediment 3b (dissolved), but which is enhanced as better explained below, represented in figures 9a-9d, and 10a-10d (inserted in the compartment delimited by the external casing 4).

In any embodiment, the external tuner-damper core 8 comprises the aforesaid mixture in the form of incoherent sediment 8a (dissolved) which can also be defined as a "not consolidated" form.

According to the first embodiment (figs. 1a-3d), the internal tuner-damper core 3 comprises said mixture in a form of consolidated sediment 3a having a discoidal conformation preferably similar to a tablet.

In particular, in such a first embodiment, the internal tuner-damper core 3 comprises two of said mixtures, in the form of consolidated sediment 3a, superimposed on and separated from each other, wherein the first polar electrode 5 is partially inserted inside a first of said mixtures 3a₁ and the second polar electrode 6 is partially inserted inside a second of said mixtures 3a₂. The ground bias and heat dissipation bar 7 is in contact with both said mixtures 3a₁, 3a₂ in the form of consolidated sediment, but spaced from the polar electrodes.

Preferably, the two tablets are superimposed along the axis defined by the ground bias and heat dissipation bar 7, which passes centrally between the two.

In addition, each internal tuner-damper core 3 comprises a metallic ring 9 that crowns and includes the mixture in the form of consolidated sediment 3a, like a "tablet", so as to make a solid peripheral contact. In other words, the mixture in the form of consolidated sediment 3a like a "tablet", embedded in said dedicated metallic ring 9, is biased on the ground by means of the bar 7 which is preferably metallic positioned in the centre of the "tablet" and orthogonal thereto, so as to determine, in the relative, an omnidirectional multigamma passive antenna.

Furthermore, the metallic ring 9 has an external electrical connection for said polar electrode as visible in the reference figures.

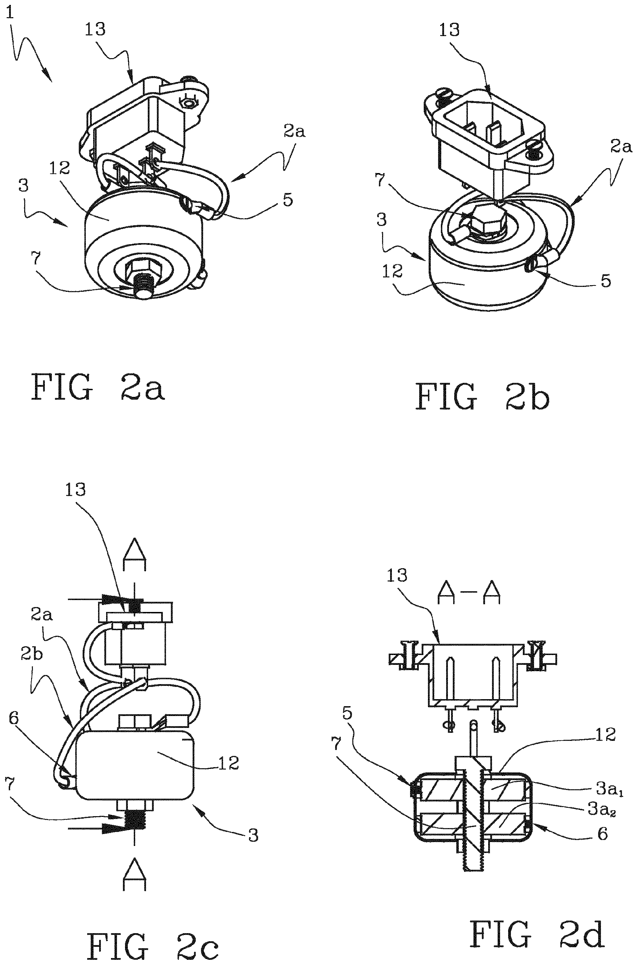

Figures 2a-2d show the same embodiment as figures 1a-1d, but in which the mixtures in the form of consolidated sediment 3a are fitted in a dedicated casing 12 of dielectric material (preferably a sheath) so as to define the first high-frequency (HF) chamber bordering and integrated with the second high-frequency (HF) chamber determined by the external tuner-damper core 8 enclosed by the dedicated external casing 4 and by the relative cover 21, preferably both metallic.

The second embodiment (figs. 4a-4d) comprises two pairs of said mixtures in the form of consolidated sediment 3a (conformed as a "tablet") in which one pair is separated from the other, but the mixtures 3a of each pair are contiguous and electrically connected also with a bridge conductor 14. Each of the mixtures 3a of the two pairs can be made with a singular composition, which is both chemical-physical, and of particle size of the clasts (particles), and by reciprocal volumetric percentages, to give the apparatus 1 subject-matter of the invention the widest possible calibration range, both in tuning (frequencies) and in damping (energy refracted in various ways), allowing the Manufacturer to adapt, according to the need and in an optimal way, the functional capacity of the apparatus 1 to the resultant of the multiple intrinsic and extrinsic variables:
- "intrinsic" understood as being specific to the High Fidelity and High Fidelity High End audio and/or video reproduction apparatuses and/or systems, and similar, assimilable and related (proximal) ones;
- "extrinsic" understood as being specific to the local environment in which said reproduction apparatuses and/or systems, and similar, assimilable and related (proximal) ones, are installed and in operation (in use).

The first polar electrode 5 is partially inserted inside one of said mixtures 3a belonging to a first pair and the second polar electrode 6 is partially inserted inside one of said mixtures 3a belonging to a second pair. Preferably, the four tablets are superimposed along the axis defined by the ground bias and heat dissipation bar 7, which passes centrally between the two.

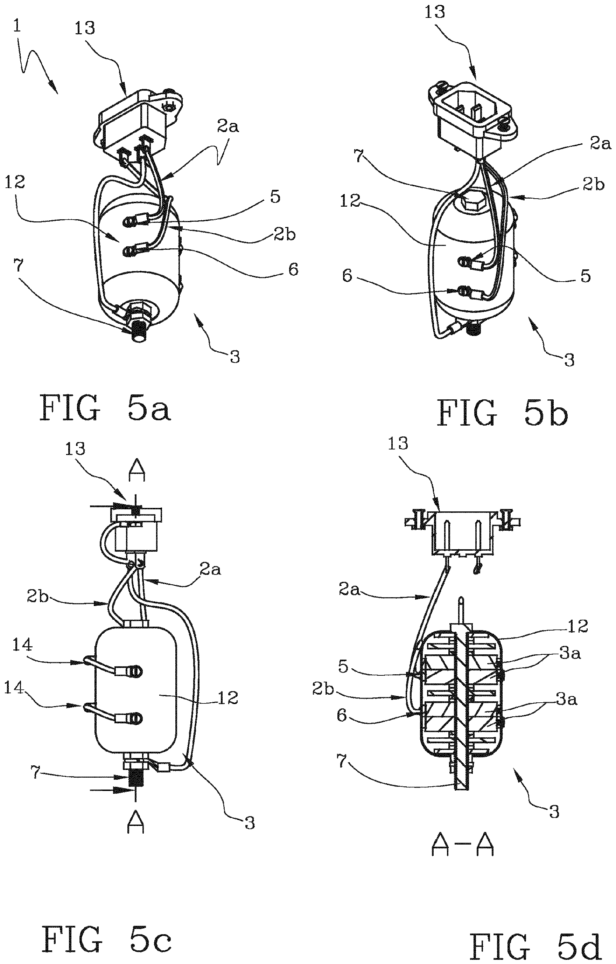

Figures 5a-5d illustrate the second embodiment of figures 4a-4d, but in which the mixtures in the form of consolidated sediment 3a are fitted in a dedicated casing 12 of dielectric material (preferably a sheath) so as to make the first high-frequency (HF) chamber bordering and integrated with the second high-frequency (HF) chamber determined by the external tuner-damper core 8 enclosed by the dedicated external casing 4 and by the cover 21, preferably both metallic.

The ground bias and heat dissipation bar 7 is in contact with both pairs of said mixtures in the form of consolidated sediment 3a.

It should be noted that in both the first and second embodiments, the bar 7 performs two functions:
- the one, of ground bias, being in contact with said mixture 3a and connected, in use, to the grounding system 101, preferably by interposed filter-earth block Antimpatto^{®} SCt;
- the other, of heat dissipation, the bar 7 being firmly joined to the external casing 4.

This ground bias and heat dissipation bar 7 has no metallic contact with the polar electrodes 5, 6 and there is no possibility of contact between them since the mixture 3a itself is interposed between the latter and the bar 7.

Preferably, each polar electrode 5, 6 can consist, for example, but not exclusively, of a metallic screw partially inserted in the mixture 3a according to the major axis of the mixtures in the form of discoidal consolidated sediment ("tablet").

In accordance with the third embodiment of the present invention (figs. 7a-8d), the internal tuner-damper core 3 comprises a mixture in the form of incoherent sediment 3b (dissolved) enclosed in a cylindrical casing 15, of dielectric material.

In particular, the first polar electrode 5 is partially inserted inside the mixture in the form of incoherent sediment 3b (dissolved) and the second polar electrode 6 is partially inserted inside the same mixture in the form of incoherent sediment 3b (dissolved) and is spaced apart from the first polar electrode 5 so that they are not in and there is no possibility of contact between them.

The ground bias and heat dissipation bar 7 is in contact with the mixture in the form of incoherent sediment 3b (dissolved).

Preferably, said casing 15 of said mixture in the form of incoherent sediment 3b (dissolved) comprises four polar electrodes (5a, 5b, 6a, 6b) that are internal and contiguous to the casing 15, preferably of hemispherical geometry (for example, blind nut) two by two coupled, 5a-5b and 6a-6b, by electromechanical connection and corresponding to the two respective (external) polar electrodes 5 and 6, so as to increase the work of the mixture 3b of absorption, damping and dissipation of the disturbance electromagnetic energy coming from the electrical power supply system 100 (circuit).

Each of the two electromechanical connections, respectively the one of the coupled internal electrodes 5a-5b of said (external) polar electrode 5, the other of the internal electrodes 6a-6b of said (external) polar electrode 6, is preferably made with a metallic strip/plate 16 contiguous to the internal surface of the casing 15.

In accordance with the fourth embodiment of the present invention (figs. 9a-10d), the internal tuner-damper core 3, comprising the mixture of incoherent sediment 3b (dissolved), is enhanced: a tuner-damper sub-unit including at the polar electrode 5 and including at the cylindrical casing 15a, of dielectric material, is dedicated to the Phase (connected to the phase conductor 2a) defining said high-frequency (HF) chamber.

Another tuner-damper sub-unit including at the polar electrode 6 and including at the cylindrical casing 15b, of dielectric material, is dedicated to the Neutral (neutral conductor 2b) and defines said high-frequency (HF) chamber. The two aforesaid high-frequency chambers (HF), one dedicated to the Phase, the other dedicated to the Neutral, contiguous along the major axis of the ground bias and heat dissipation bar 7, and shared by them, are bordering and integrated with the high-frequency (HF) chamber determined by the external tuner-damper core 8 which is enclosed in the dedicated external casing 4, which includes them.

Preferably, said casings 15a and 15b respectively of the two mixtures in the form of incoherent sediment 3b₁ and 3b₂ (dissolved), each comprise four internal electrodes partially inserted in said mixtures, preferably of hemispherical geometry (for example, a blind nut), connected to each other, preferably with a metallic strip/plate 16, respectively 5a-5b-5c-5d contiguous to the internal surface of the casing 15a and 6a-6b-6c-6d contiguous to the internal surface of the casing 15b, and corresponding to the two respective polar electrodes 5 and 6, so as to increase the work of the mixture 3b of absorption, damping and dissipation of the disturbance electromagnetic energy coming from the electrical power supply system (circuit).

It should be noted that in each of the aforesaid embodiments, the ground bias and heat dissipation bar 7 is in contact with each mixture 3b of the internal tuner-damper core 3 and is connected, in use, to the grounding system 101, preferably by interposed filter-earth block Antimpatto^{®} SCt.

Said ground bias and heat dissipation bar 7 has no possibility of metallic contact with the internal electrodes 5a, 5b, 5c, 5d and 6a, 6b, 6c, 6d since the mixture 3b itself is interposed between the latter and the bar 7. Furthermore, as already mentioned for each embodiment shown above, the apparatus 1 comprises an external casing 4 preferably made of metal and having an external finned surface 18 so as to define, as a whole, properties of positive (constructive) electromagnetic anti-interference, of skin anti-effect and of high thermal conductivity.

Preferably, but not necessarily, the metallic external casing 4 is made of metal alloys, especially Aluminium Alloys (Al) (e.g., in order of best performance, but without exhausting them: Al-Mg-Si, Al-Mn, adapted to take to the extreme the characteristics that are specific and peculiar to the apparatus 1 as a whole such as, for example, but without exhausting them, positive (or constructive) electromagnetic anti-interference and, relative to the casing, anti-skin effect and of high thermal conductivity.

In addition, the fins 19 that characterise the external surface 18 of the casing integrate and take to the extreme said peculiar characteristics such as, for example, positive (or constructive) anti-interference, skin anti-effect and cooling.

The colour of the external surface 18 of the casing can vary in a range between Cyan and Violet, especially Blue, Indigo, without exhausting them (in particular Ral 5002, Deep Blue, Classic Ral) especially, but not only to integrate and extend the spectrum of frequencies in order to obtain the maximum interaction of the apparatus 1 as a whole with the incident phenomena.

It should be noted that the painting technique is carried out by anodization, while the thickness of the pigment can be varied and in any case of the order of some tens to a few tens of µm.

Furthermore, as visible in the attached figures, the apparatus 1 comprises a terminal base 20, which is functional and self-supporting the same apparatus 1. Said base 20 is preferably made of Granite. Preferably, it is widened with respect to the external casing 4, preferably metallic, which surmounts it. The base 20 and the external casing 4 are firmly interconnected.

This Granite base 20 preferably has a cylindrical external surface chiselled in high relief. By way of example, it is possible to use "absolute black" Granite, for its multiple characteristics among which, without exhausting them: amagneticity, electrical insulation, piezoelectricity and pyroelectricity of crystals of minerals that are components thereof, non-attackability to acids, resistance to oxidation, etc...

In addition, the external casing 4 has a cover 4a, preferably metallic, having a discoidal superimposed plate 21 advantageously removable (by the Manufacturer) to access the holes 22, preferably provided with a grid, designed for inspection and recharging the mixture of incoherent sediment 8a (dissolved) defining the external core 8.

Alternatively, these holes 22, preferably with grid, can be used for the insertion and connection of a fuse and relative fuse holder and/or a light signal lamp which are connected, based on the polarities of the electrical power supply system 100, so as to signal the continuity of operation of the apparatus 1.

Furthermore, recessed in the centre of the cover 4a and in a dedicated compartment, an electrical connector 13 (recessed plug) is positioned having three electrical contacts, in the form of fins, respectively connected to the Phase input (in) 2a and to the Neutral input 2b and to said ground bias and heat dissipation bar 7 so as to receive said electrical signal. These connections are insulated by dielectric covering so as not to come into electrical contact with the mixture of incoherent sediment 8a contained in the external tuner-damper core 8.

The plate 21, preferably discoidal in shape, has an opening arranged at the electrical connector 13 (recessed plug).

This electrical connector 13 is arranged to connect the apparatus 1 to the electrical power supply system 100 through a dedicated shielded electrical conductor.

The present invention also relates to an electrical power supply system comprising an electrical power supply system 100 at low voltage or very low voltage comprising at least one Phase electric conductor and one Neutral electric conductor and at least one audio and/or video reproduction apparatus/system connected to the electrical power supply system 100 to be powered by the latter. In particular, the system comprises an apparatus 1 previously described, wherein the Phase input (in) 2a is connected by derivation of said electrical Phase conductor, and the Neutral input (in) 2b is connected by derivation of the Neutral electrical conductor.

By way of example, some configurations for connecting one or more apparatuses may be:
- immediately upstream and by derivation of the power supply inputs (in) at low voltage and/or very low voltage of an audio and/or video reproduction apparatus/system;
- immediately upstream and by derivation of the main switches of the electrical panels of the electrical power supply system 100;
- immediately downstream and by derivation of the delivery point of the electricity of the Supplying Entity and/or the delivery point of the telephone/data lines of the Telephone Service Entity;
- by derivation to the electrical conductors, at low voltage and/or very low voltage, and equally distributed along distinct sections of the electrical power supply system 100 and with pre-established pitches depending on whether the sections of conductors are indoor or outdoor.

In detail, some configurations could be: two apparatuses made according to the first and/or the second embodiment described above and connected by derivation of the electrical power supply system 100, or two apparatuses of which one is made according to the first and/or the second embodiment and the other is made according to the third and/or the fourth embodiment, or two apparatuses made according to the third and/or the fourth embodiment, depending on the High Fidelity and High Fidelity High End audio and/or video reproduction apparatuses (intrinsic characteristics), and similar, assimilable and related (proximal) ones and the environments in which they are installed and in which they accomplish their functions (extrinsic characteristics).

Finally, a method for preventing audio and/or video alterations and distortions with origin external and internal to the electrical power supply systems 100 at low voltage and/or very low voltage, in alternating or direct current, of an audio and/or video reproduction apparatus connected to the same electrical power supply system 100 is also a subject-matter of the present invention.

In particular, the method provides for connecting at least one apparatus 1, made as described above, by derivation of said electrical power supply system 100 and in proximity to said audio and/or video reproduction apparatus/system.

The present invention achieves the set objects of providing a prevention of the alterations and distortions in the High Fidelity (Hi-Fi) and High Fidelity High End (Hi-Fi High End) audio and/or video reproduction. In particular, the apparatus 1 and the method allow high and extremely high quality audio and/or video reproduction, safely, ensuring maximum effectiveness and reliability and, at the same time, intrinsic and extrinsic safety.

In detail, the apparatus 1 subject-matter of the invention is connected by derivation (in parallel) to the electrical power supply system 100 and in proximity to the High Fidelity and High Fidelity High End audio and/or video reproduction apparatuses, and similar, assimilable and related (proximal) ones and realizes a voltmetric-capacitive (voltage) and non-amperometric-resistive (current) coupling with the electrical power supply system 100.

The apparatus 1 and the relative method are conformed and configured so as to achieve the solution to all disturbance phenomena, including harmonics and spurious ones, which originate from electromagnetic stresses that are external and internal to the electric energy transport and distribution lines (power lines), to the electrical systems (circuits) at low and very low voltage and to the telephone/data networks and lines and which are harmful not only to the audio and video apparatuses/systems, in particular High Fidelity (Hi-Fi) and High Fidelity High End (Hi-Fi High End), but also, in general, to the electrical and electronic user apparatuses, especially if sophisticated, and for the same electrical power supply system (circuit) and for the same telephone/data line.

In addition, the apparatus 1, as a functional unit, also acts as an omnidirectional multigamma passive antenna in that it receives concentrated and intense electromagnetic radiations, by reaction partly reflects them in a distributed manner and partly refracts them (the energy is refracted in various ways); in short: it absorbs, dampens, dissipates impacts and electric vibrations (of electric charges).

The apparatus 1 and the relative method are conformed and configured to also achieve the solution to local electromagnetic pollution, electrosmog, that is, in proximity to audio/video reproduction apparatuses and systems, especially High Fidelity (Hi-Fi) and High Fidelity High End (Hi-Fi High End), and similar, assimilable and related (proximal) ones, always with the intrinsic and exclusive ability to ensure safety.

It should be noted that the apparatus 1 subject-matter of the invention is arranged to be connected by derivation also for three-phase 400V electrical power supply systems (3Phases + Neutral). In this case, one apparatus 1 must be dedicated to a Phase and Neutral (F+N), while another apparatus 1, to complete the configuration of the electrical power supply system 100, must be dedicated to the other two Phases (F+F).

## Claims

1. An apparatus (1) for preventing audio and/or video alterations and distortions with origin external and internal to electrical power supply systems (100) at low or very low voltage, in direct or alternating current, comprising:
at least one Phase input (2a) and one Neutral input (2b), in use, connected by derivation to a Phase and a Neutral of the electrical power supply system (100) to receive an electrical voltage signal;
an external casing (4) internally presenting a containment compartment;
an internal tuner-damper core (3) arranged in the containment compartment of the external casing (4) and comprising a mixture selected from a consolidated sediment (3a) or an incoherent sediment (3b), which are non-hygroscopic, of particles of a piezoelectric, pyroelectric material, possible semiconductor and possible refractory inert, in air, configured to detect and transform electromagnetic energy at the origin of disturbance phenomena, into mechanical energy and thermal energy;
said internal tuner-damper core (3) comprising a first polar electrode (5) and a second polar electrode (6) both partially inserted inside said mixture (3a, 3b) and in contact therewith; said first and second polar electrodes (5), (6) being connected to a respective Phase input (2a) and a Neutral input (2b) to receive said electrical voltage signal;
said internal tuner-damper core (3) comprising at least one ground bias and heat dissipation bar (7) at least partially immersed inside said mixture (3a, 3b), but spaced apart from said polar electrodes (5), (6) and connected, in use, to a grounding system (101);
**characterised in that** said internal tuner-damper core (3) is inserted in a dedicated casing (12, 15) of dielectric material and determines a first high-frequency, HF, chamber, said apparatus (1) further comprising an external tuner-damper core (8) bordering and integrated with the internal tuner-damper core (3); said external tuner-damper core (8) being arranged externally to the internal tuner-damper core (3) so that it is interposed between the external casing (4), which is preferably metallic, and the internal tuner-damper core (3) so as to determine a second high-frequency, HF, chamber; said external tuner-damper core (8) comprising a mixture of a sediment in incoherent form (8a), which is non-hygroscopic, of particles of a piezoelectric, pyroelectric material and possible semiconductor and possible refractory inert, in air, configured to detect and transform the electromagnetic energy at the origin of the disturbance phenomena into mechanical and thermal energy.

2. The apparatus (1) according to claim 1 **characterised in that** said internal tuner-damper core (3) comprises said mixture of consolidated sediment (3a).

3. The apparatus (1) according to claim 2 **characterised in that** said internal tuner-damper core (3) comprises two of said mixtures of consolidated sediment (3a) that are separated from each other, wherein the first polar electrode (5) is partially inserted inside a first of said mixtures (3a₁) and the second polar electrode (6) is partially inserted inside a second of said mixtures (3a₂); said ground bias and heat dissipation bar (7) being in contact with both said mixtures of consolidated sediment (3a).

4. The apparatus (1) according to claim 2 or 3 **characterised in that** said internal tuner-damper core (3) comprises a metallic ring (9) which crowns and includes a respective mixture of consolidated sediment (3a) so as to make a solid peripheral contact; said metallic ring (9) presenting an electrical connection for said first polar electrode (5) or said second polar electrode (6).

5. The apparatus (1) according to any one of claims 2 to 4 **characterised in that** said internal tuner-damper core (3) is enhanced **in that** it comprises two pairs of said mixtures of consolidated sediment (3a) wherein one pair is separated from the other and wherein the first polar electrode (5) is partially inserted inside one of said mixtures (3a) belonging to a first pair and the second polar electrode (6) is partially inserted inside one of said mixtures (3a) belonging to a second pair; optionally, each of said mixtures (3a) of the two pairs can be made with a singular composition which is both chemical-physical and with particle size of the clasts, that is the particles, and by reciprocal volumetric percentages; said mixtures (3a) of each pair being in contact with each other and being electrically connected by means of a bridge electric wire (14); said ground bias and heat dissipation bar (7) being in contact with both pairs of said mixtures (3a) of consolidated sediment.

6. The apparatus (1) according to any one of claims 2 to 5 **characterised in that** it comprises a sheath (12) of dielectric material that fits in a dedicated manner said internal tuner-damper core (3) determining said first main high-frequency (HF) chamber.

7. The apparatus (1) according to claim 1 **characterised in that** said internal tuner-damper core (3) is enclosed in a casing (15) of dielectric material containing said mixture in the form of incoherent sediment (3b), that is dissolved or not consolidated.

8. The apparatus (1) according to claim 7 **characterised in that** said first polar electrode (5) is partially inserted inside said mixture in the form of incoherent sediment (3b) and said second polar electrode (6) is partially inserted inside the same mixture in the form of incoherent sediment (3b) and being spaced apart from the first polar electrode (5) so that they are not in contact with each other; said ground bias and heat dissipation bar (7) being in contact with said mixture in the form of incoherent sediment (3b).

9. The apparatus (1) according to one of claims 7 or 8 **characterised in that** said casing (15) of said mixture in the form of incoherent sediment (3b) comprises four internal electrodes contiguous to the casing (15), preferably of hemispherical geometry, two by two coupled (5a-5b) and (6a-6b), by electromechanical connection and corresponding to the two respective polar electrodes (5) and (6), so as to increase the work of the mixture (3b) of absorption, damping and dissipation of the disturbance electromagnetic energy coming from the electrical power supply system (100).

10. The apparatus (1) according to claim 9 **characterised in that** each of said two electromechanical connections is made with a metallic strip/plate (16) contiguous to the internal surface of the casing (15).

11. The apparatus (1) according to any one of claims 7 to 10 **characterised in that** the tuner-damper core (3) in the form of mixture of incoherent sediment (3b) is enhanced **in that** it comprises a first tuner-damper sub-unit connected to the first polar electrode (5), partially inserted in said mixture (3b), and contained in the casing (15a), of dielectric material, preferably cylindrical, and connected to the Phase input (2a) so as to define said high-frequency (HF) chamber; said mixture of incoherent sediment (3b) comprising a second tuner-damper sub-unit connected to the second polar electrode (6), partially inserted in said mixture, and contained in the casing (15b), of dielectric material, preferably cylindrical, and connected to the Neutral input (2b) defining said high-frequency (HF) chamber.

12. The apparatus (1) according to any one of claims 7 to 11 **characterised in that** said casings (15a and 15b) of said mixtures in the form of incoherent sediments (3b) each comprise four internal electrodes (5a, 5b, 5c, 5d) and (6a, 6b, 6c, 6d), preferably of hemispherical geometry, joined together by electromechanical connection, respectively of internal electrodes (5a-5b-5c-5d) connected to the first polar electrode (5) and contiguous to the casing (15a), and internal electrodes (6a-6b-6c-6d) connected to the second polar electrode (6) and contiguous to the casing (15b), so as to increase the work of said mixtures (3b) of absorption, damping and dissipation of the disturbance electromagnetic energy coming from the electrical power supply system (100).

13. The apparatus (1) according to claim 12 **characterised in that** each of said two electromechanical connections of the internal electrodes (5a-5b-5c-5d), (6a-6b-6c-6d) is made with a metallic strip/plate (16) contiguous to the internal surface of the respective casings (15a, 15b).

14. The apparatus (1) according to any one of the preceding claims **characterised in that** it comprises an electrical connector (13) having three electrical contacts respectively connected to the Phase input (2a), to the Neutral input (2b) and to said ground bias and heat dissipation bar (7); said electrical connector (13) being shaped to couple to an electrical plug connectable to the electrical power supply system (100), through a dedicated shielded electrical conductor, to receive said electrical voltage signal.

15. The apparatus (1) according to any one of the preceding claims **characterised in that** said external casing (4) is made of metal and has an external finned surface (18) so as to define, as a whole, properties of positive electromagnetic anti-interference, that is constructive, of skin anti-effect and of high thermal conductivity.

16. The apparatus (1) according to claim 15 **characterised in that** said external casing (4) comprises a cover (4a) on which a plate (21) is superimposed, both preferably metallic, and which is removable to access holes (22) for inspection and recharging the mixture in the form of incoherent sediment (8a), that is dissolved or not consolidated, defining the external core (8) and/or for the insertion and the connection of a fuse and/or a light signal lamp adapted to signal the continuity of operation, and which are connected based on the polarities of the electrical power supply system (100).

17. The apparatus (1) according to any one of claims 15 to 16 **characterised in that** said external casing (4) is made of aluminium alloys and the colour of the external surface (18) of the external casing (4) can vary between Cyan and Violet, especially Blue, Indigo, without exhausting the options, in order to integrate and extend the spectrum of frequencies so to obtain the maximum interaction of the apparatus (1) as a whole with the incident phenomena.

18. The apparatus (1) according to any one of claims 15 to 17 **characterised in that** said external casing (4) comprises a base (20) acting as a terminal of the apparatus (1) and self-supporting the same apparatus (1), and preferably made of Granite on which said external casing (4) is firmly interconnected.

19. The apparatus (1) according to claim 18 **characterised in that** said Granite base (20) has a cylindrical external surface chiselled in high relief.

20. The apparatus (1) according to any one of the preceding claims **characterised in that** it is configured so as to act, as a functional unit, also as an omnidirectional multigamma passive antenna designed to receive concentrated and intense electromagnetic radiations and, by reaction, partly to reflect them in a distributed manner and partly to refract them, the energy of which is refracted in various ways, so as to absorb, dampen and dissipate impacts and electrical vibrations, that is electrical charges.

21. The apparatus (1) according to any one of the preceding claims **characterised in that** it is conformed and configured to neutralise local electromagnetic pollution, electrosmog, in proximity to audio and/or video apparatuses and systems, especially in High Fidelity, Hi-Fi, and High Fidelity High End, Hi-Fi High End, maintaining intrinsic and exclusive ability to guarantee safety.

22. An electrical power supply system comprising:
- an electrical power supply system (100) at low voltage or very low voltage comprising at least one Phase electric conductor and one Neutral electric conductor;
- at least one audio and/or video reproduction apparatus/system connected to the electrical power supply system (100) to be powered; **characterised in that** it comprises an apparatus (1) according to any one of the preceding claims, wherein the Phase input (2a) is connected by derivation of said electric Phase conductor, and said Neutral input (2b) is connected by derivation of said electric Neutral conductor.

23. A method for preventing audio and/or video alterations and distortions with origin external and internal to electrical power supply systems (100) at low or very low voltage, in alternating or direct current, of an audio and/or video reproduction apparatus/system connected to the same electrical power supply system (100);
**characterised in that** it connects at least one apparatus (1) made according to any one of claims 1 to 21 by derivation of said electrical power supply system (100) and in proximity to said audio and/or video reproduction apparatus/system.

## Patentansprüche

1. Vorrichtung (1) zur Verhinderung von Audio- und/oder Videoveränderungen und -verzerrungen mit Ursprung außerhalb und innerhalb von elektrischen Stromversorgungssystemen (100) bei niedriger oder sehr niedriger Spannung, in Gleich- oder Wechselstrom, umfassend:
mindestens einen Phaseneingang (2a) und einen Neutraleingang (2b), die im Gebrauch durch Ableitung mit einer Phase und einem Neutral des elektrischen Stromversorgungssystems (100) verbunden sind, um ein elektrisches Spannungssignal zu empfangen;
ein Außengehäuse (4), das innen eine Aufnahmeunterteilung aufweist;
einen internen Tuner-Dämpfer-Kern (3), der in der Aufnahmeunterteilung des Außengehäuses (4) angeordnet ist und eine Mischung umfasst, die aus einem verfestigten Sediment (3a) oder einem inkohärenten Sediment (3b), die nicht hygroskopisch sind, aus Partikeln eines piezoelektrischen, pyroelektrischen Materials, möglichen Halbleiters und möglichen feuerfesten Inertstoff in der Luft, ausgewählt ist, der ausgelegt ist, um elektromagnetische Energie am Ursprung von Störungserscheinungen zu erfassen und in mechanische Energie und thermische Energie umzuwandeln;
wobei der interne Tuner-Dämpfer-Kern (3) eine erste polare Elektrode (5) und eine zweite polare Elektrode (6) umfasst, die beide teilweise in der Mischung (3a, 3b) eingesetzt sind und mit dieser in Kontakt stehen;
wobei die erste und die zweite polare Elektrode (5), (6) mit einem jeweiligen Phaseneingang (2a) und einem Neutraleingang (2b) verbunden sind, um das elektrische Spannungssignal zu empfangen;
wobei der interne Tuner-Dämpfer-Kern (3) mindestens einen Erdvorspannungs- und Wärmeableitungsstab (7) umfasst, der mindestens teilweise in die Mischung (3a, 3b) eingetaucht ist, aber von den polaren Elektroden (5), (6) beabstandet ist und im Gebrauch mit einem Erdungssystem (101) verbunden ist;
**dadurch gekennzeichnet, dass** der interne Tuner-Dämpfer-Kern (3) in ein dediziertes Gehäuse (12, 15) aus dielektrischem Material eingesetzt ist und eine erste Hochfrequenz-, HF-, Kammer festlegt, wobei die Vorrichtung (1) ferner einen externen Tuner-Dämpfer-Kern (8) umfasst, der an den internen Tuner-Dämpfer-Kern (3) angrenzt und mit diesem integriert ist; wobei der externe Tuner-Dämpfer-Kern (8) außerhalb des internen Tuner-Dämpfer-Kerns (3) angeordnet ist, so dass er zwischen dem Außengehäuse (4), das vorzugsweise metallisch ist, und dem internen Tuner-Dämpfer-Kern (3) eingefügt ist, um eine zweite Hochfrequenz-, HF-, Kammer festzulegen;
wobei der externe Tuner-Dämpfer-Kern (8) eine Mischung aus einem Sediment in inkohärenter Form (8a), das nicht hygroskopisch ist, aus Partikeln eines piezoelektrischen, pyroelektrischen Materials und eines möglichen Halbleiters und eines möglichen feuerfesten Inertstoffs in der Luft umfasst, der ausgelegt ist, um die elektromagnetische Energie am Ursprung der Störungserscheinungen zu erfassen und sie in mechanische und thermische Energie umzuwandeln.

2. Vorrichtung (1) nach Anspruch 1, **dadurch gekennzeichnet, dass** der interne Tuner-Dämpfer-Kern (3) die Mischung aus verfestigtem Sediment (3a) umfasst.

3. Vorrichtung (1) nach Anspruch 2, **dadurch gekennzeichnet, dass** der interne Tuner-Dämpfer-Kern (3) zwei der Mischungen aus verfestigtem Sediment (3a) umfasst, die voneinander getrennt sind, wobei die erste polare Elektrode (5) teilweise in eine erste der Mischungen (3a₁) eingesetzt ist und die zweite polare Elektrode (6) teilweise in eine zweite der Mischungen (3a₂) eingesetzt ist; wobei die Erdvorspannungs- und Wärmeableitungsstab (7) mit beiden Mischungen aus verfestigtem Sediment (3a) in Kontakt steht.

4. Vorrichtung (1) nach Anspruch 2 oder 3, **dadurch gekennzeichnet, dass** der interne Tuner-Dämpfer-Kern (3) einen metallischen Ring (9) umfasst, der eine jeweilige Mischung aus verfestigtem Sediment (3a) krönt und enthält, um einen festen Umfangskontakt herzustellen; wobei der metallische Ring (9) eine elektrische Verbindung für die erste polare Elektrode (5) oder die zweite polare Elektrode (6) aufweist.

5. Vorrichtung (1) nach einem der Ansprüche 2 bis 4, **dadurch gekennzeichnet, dass** der interne Tuner-Dämpfer-Kern (3) dahingehend verbessert ist, dass er zwei Paare der Mischungen aus verfestigtem Sediment (3a) umfasst, wobei ein Paar von dem anderen getrennt ist und wobei die erste polare Elektrode (5) teilweise in eine der Mischungen (3a) eingesetzt ist, die zu einem ersten Paar gehören, und die zweite polare Elektrode (6) teilweise in eine der Mischungen (3a) eingesetzt ist, die zu einem zweiten Paar gehören; optional kann eine jede der Mischungen (3a) der beiden Paare mit einer einzigartigen Zusammensetzung hergestellt werden, die sowohl chemischphysikalisch als auch mit der Partikelgröße der Klasten, d.h. der Partikel, ist und durch reziproke Volumenprozentsätze ist; wobei die Mischungen (3a) eines jeden Paares miteinander in Kontakt stehen und mittels eines elektrischen Brückendrahts (14) elektrisch verbunden sind; wobei der Erdvorspannungs- und Wärmeableitungsstab (7) mit beiden Paaren Mischungen (3a) aus verfestigtem Sediment in Kontakt steht.

6. Vorrichtung (1) nach einem der Ansprüche 2 bis 5, **dadurch gekennzeichnet, dass** sie eine Hülle (12) aus dielektrischem Material umfasst, die auf dedizierte Weise in den internen Tuner-Dämpfer-Kern (3) passt, der die erste Hochfrequenz-Hauptkammer (HF) festlegt.

7. Vorrichtung (1) nach Anspruch 1, **dadurch gekennzeichnet, dass** der interne Tuner-Dämpfer-Kern (3) in einem Gehäuse (15) aus dielektrischem Material eingeschlossen ist, das die Mischung in Form von inkohärentem Sediment (3b) enthält, das gelöst oder nicht verfestigt ist.

8. Vorrichtung (1) nach Anspruch 7, **dadurch gekennzeichnet, dass** die erste polare Elektrode (5) teilweise in die Mischung in Form von inkohärentem Sediment (3b) eingesetzt ist und die zweite polare Elektrode (6) teilweise in die gleiche Mischung in Form von inkohärentem Sediment (3b) eingesetzt ist und von der ersten polaren Elektrode (5) beabstandet ist, so dass sie nicht miteinander in Kontakt stehen; wobei der Erdvorspannungs- und Wärmeableitungsstab (7) mit der Mischung in Form von inkohärentem Sediment (3b) in Kontakt steht.

9. Vorrichtung (1) nach einem der Ansprüche 7 oder 8, **dadurch gekennzeichnet, dass** das Gehäuse (15) der Mischung in Form von inkohärentem Sediment (3b) vier innere Elektroden umfasst, die an das Gehäuse (15) angrenzen, vorzugsweise mit halbkugelförmiger Geometrie, zwei und zwei gekoppelt (5a-5b) und (6a-6b), durch elektromechanische Verbindung und entsprechend den zwei jeweiligen polaren Elektroden (5) und (6), um die Arbeit der Mischung (3b) der Absorption, Dämpfung und Dissipation der elektromagnetischen Störenergie, die von dem elektrischen Stromversorgungssystem (100) kommt, zu erhöhen.

10. Vorrichtung (1) nach Anspruch 9, **dadurch gekennzeichnet, dass** eine jede der zwei elektromechanischen Verbindungen mit einem/r Metallstreifen/-platte (16) hergestellt ist, der/die an die Innenoberfläche des Gehäuses (15) angrenzt.

11. Vorrichtung (1) nach einem der Ansprüche 7 bis 10, **dadurch gekennzeichnet, dass** der Tuner-Dämpfer-Kern (3) in Form einer Mischung aus inkohärentem Sediment (3b) dahingehend verbessert ist, dass er eine erste Tuner-Dämpfer-Untereinheit umfasst, die mit der ersten polaren Elektrode (5) verbunden ist, teilweise in die Mischung (3b) eingesetzt ist und in dem Gehäuse (15a), aus dielektrischem Material, vorzugsweise zylindrisch, enthalten ist, und mit dem Phaseneingang (2a) verbunden ist, um die Hochfrequenz (HF)-Kammer zu definieren; wobei die Mischung aus inkohärentem Sediment (3b) eine zweite Tuner-Dämpfer-Untereinheit umfasst, die mit der zweiten polaren Elektrode (6) verbunden ist, teilweise in die Mischung eingesetzt ist und in dem Gehäuse (15b), aus dielektrischem Material, vorzugsweise zylindrisch, enthalten ist, und mit dem Neutraleingang (2b) verbunden ist, der die Hochfrequenz (HF)-Kammer definiert.

12. Vorrichtung (1) nach einem der Ansprüche 7 bis 11, **dadurch gekennzeichnet, dass** die Gehäuse (15a und 15b) der Mischungen in Form von inkohärenten Sedimenten (3b) jeweils vier Innenelektroden (5a, 5b, 5c, 5d) und (6a, 6b, 6c, 6d), vorzugsweise mit halbkugelförmiger Geometrie, die durch elektromechanische Verbindung miteinander zusammengefügt sind, jeweils von Innenelektroden (5a-5b-5c-5d), die mit der ersten polaren Elektrode (5) verbunden sind und an das Gehäuse (15a) angrenzen, und Innenelektroden (6a-6b-6c-6d), die mit der zweiten polaren Elektrode (6) verbunden sind und an das Gehäuse (15b) angrenzen, umfassen, um die Arbeit der Mischungen (3b) der Absorption, Dämpfung und Dissipation der elektromagnetischen Störenergie, die von dem elektrischen Stromversorgungssystem (100) kommt, zu erhöhen.

13. Vorrichtung (1) nach Anspruch 12, **dadurch gekennzeichnet, dass** eine jede der zwei elektromechanischen Verbindungen der Innenelektroden (5a-5b-5c-5d), (6a-6b-6c-6d) mit einem/r Metallstreifen/-platte (16) hergestellt ist, der/die an die Innenoberfläche der jeweiligen Gehäuse (15a, 15b) angrenzt.

14. Vorrichtung (1) nach einem der vorhergehenden Ansprüche, **dadurch gekennzeichnet, dass** sie einen elektrischen Verbinder (13) mit drei elektrischen Kontakten umfasst, die jeweils mit dem Phaseneingang (2a), dem Neutraleingang (2b) und dem Erdvorspannungs- und Wärmeableitungsstab (7) verbunden sind; wobei der elektrische Verbinder (13) so geformt ist, dass er mit einem elektrischen Stecker gekoppelt ist, der über einen dedizierten abgeschirmten elektrischen Leiter mit dem elektrischen Stromversorgungssystem (100) verbunden werden kann, um das elektrische Spannungssignal zu empfangen.

15. Vorrichtung (1) nach einem der vorhergehenden Ansprüche, **dadurch gekennzeichnet, dass** das Außengehäuse (4) aus Metall hergestellt ist und eine äußere gerippte Oberfläche (18) aufweist, um als Ganzes Eigenschaften einer positiven elektromagnetischen Anti-Interferenz, die konstruktiv ist, einer Anti-Hautwirkung und einer hohen Wärmeleitfähigkeit zu definieren.

16. Vorrichtung (1) nach Anspruch 15, **dadurch gekennzeichnet, dass** das Außengehäuse (4) eine Abdeckung (4a) umfasst, auf der eine Platte (21) überlagert ist, beide vorzugsweise metallisch, und die entfernbar ist, um auf Löcher (22) zuzugreifen, um die Mischung in Form von inkohärentem Sediment (8a), das gelöst oder nicht verfestigt ist, zu inspizieren und wieder aufzuladen, definierend des Außenkerns (8), und/oder zum Einsetzen und Verbinden einer Sicherung und/oder einer Lichtsignallampe, die dazu ausgelegt ist, die Kontinuität des Betriebs zu signalisieren, und die auf der Grundlage der Polaritäten des elektrischen Stromversorgungssystems (100) verbunden sind.

17. Vorrichtung (1) nach einem der Ansprüche 15 bis 16, **dadurch gekennzeichnet, dass** das Außengehäuse (4) aus Aluminiumlegierungen hergestellt ist und die Farbe der Außenoberfläche (18) des Außengehäuses (4) zwischen Cyan und Violett, insbesondere Blau, Indigo, variieren kann, ohne die Möglichkeiten zu erschöpfen, um das Spektrum der Frequenzen zu integrieren und zu erweitern, um so die maximale Interaktion der Vorrichtung (1) als Ganzes mit den einfallenden Phänomenen zu erhalten.

18. Vorrichtung (1) nach einem der Ansprüche 15 bis 17, **dadurch gekennzeichnet, dass** das Außengehäuse (4) eine Basis (20) umfasst, die als Anschluss der Vorrichtung (1) fungiert und dieselbe Vorrichtung (1) selbsttragend trägt und vorzugsweise aus Granit besteht, auf dem das Außengehäuse (4) fest miteinander verbunden ist.

19. Vorrichtung (1) nach Anspruch 18, **dadurch gekennzeichnet, dass** die Granitbasis (20) eine zylindrische Außenoberfläche aufweist, die in ein hohes Relief gemeißelt ist.

20. Vorrichtung (1) nach einem der vorhergehenden Ansprüche, **dadurch gekennzeichnet, dass** sie so ausgelegt ist, dass sie als funktionale Einheit auch als omnidirektionale passive Multigamma-Antenne wirkt, die dazu ausgestaltet ist, konzentrierte und intensive elektromagnetische Strahlungen zu empfangen und sie durch Reaktion teilweise verteilt zu reflektieren und teilweise zu brechen, deren Energie auf verschiedene Weise gebrochen wird, um Stöße und elektrische Schwingungen, d. h. elektrische Ladungen, zu absorbieren, zu dämpfen und abzuführen.

21. Vorrichtung (1) nach einem der vorhergehenden Ansprüche, **dadurch gekennzeichnet, dass** sie so angepasst und ausgelegt ist, dass sie lokale elektromagnetische Verschmutzung, Elektrosmog, in der Nähe von Audio- und/oder Videovorrichtungen und -systemen, insbesondere in High-Fidelity-, Hi-Fi- und High-Fidelity-High-End-, Hi-Fi-High-End, neutralisiert und die intrinsische und ausschließliche Fähigkeit zur Gewährleistung der Sicherheit beibehält.

22. Elektrisches Stromversorgungssystem, umfassend:
- ein elektrisches Stromversorgungssystem (100) bei niedriger Spannung oder sehr niedriger Spannung, das mindestens einen elektrischen Phasenleiter und einen elektrischen Neutralleiter umfasst;
- mindestens ein/e Audio- und/oder Videowiedergabevorrichtung/-system, das mit dem elektrischen Stromversorgungssystem (100) verbunden ist, das mit Strom versorgt werden soll;
**dadurch gekennzeichnet, dass** es eine Vorrichtung (1) nach einem der vorhergehenden Ansprüche umfasst, wobei der Phaseneingang (2a) durch Ableitung des elektrischen Phasenleiters verbunden ist und der Neutraleingang (2b) durch Ableitung des elektrischen Neutralleiters verbunden ist.

23. Verfahren zur Verhinderung von Audio- und/oder Videoveränderungen und -verzerrungen mit Ursprung außerhalb und innerhalb von elektrischen Stromversorgungssystemen (100) bei niedriger oder sehr niedriger Spannung, in Wechsel- oder Gleichstrom, einer/s Audio- und/oder Videowiedergabevorrichtung/- systems, die/das mit demselben elektrischen Stromversorgungssystem (100) verbunden ist;
**dadurch gekennzeichnet, dass** es mindestens eine Vorrichtung (1), die nach einem der Ansprüche 1 bis 21 hergestellt ist, durch Ableitung des elektrischen Stromversorgungssystems (100) und in der Nähe der/s Audio- und/oder Videowiedergabevorrichtung/-systems verbindet.

## Revendications

1. Appareil (1) permettant d'éviter les altérations et les distorsions audio et/ou vidéo d'origine externe et interne aux systèmes d'alimentation électrique (100) à basse ou très basse tension, en courant continu ou alternatif, comprenant :
au moins une entrée de phase (2a) et une entrée neutre (2b), en fonctionnement, branchées par dérivation à une phase et à un neutre du système d'alimentation électrique (100) pour recevoir un signal de tension électrique ;
une enveloppe externe (4) présentant à l'intérieur un compartiment de contenance ;
un noyau (3) amortisseur de syntoniseur interne disposé dans le compartiment de contenance de l'enveloppe externe (4) et comprenant un mélange choisi parmi un sédiment consolidé (3a) ou un sédiment incohérent (3b), étant non hygroscopiques, de particules d'un matériau piézoélectrique, pyroélectrique, éventuellement semi-conducteur et éventuellement inerte réfractaire, dans l'air, configuré pour détecter et transformer l'énergie électromagnétique à l'origine des phénomènes de perturbation, en énergie mécanique et en énergie thermique ;
ledit noyau (3) amortisseur de syntoniseur interne comprenant une première électrode polarisée (5) et une deuxième électrode polarisée (6) toutes deux partiellement insérées à l'intérieur dudit mélange (3a, 3b) et en contact avec celui-ci ; lesdites première et deuxième électrodes polarisées (5), (6) étant branchées à une entrée de phase (2a) et à une entrée neutre (2b) respectives pour recevoir ledit signal de tension électrique ;
ledit noyau (3) amortisseur de syntoniseur interne comprenant au moins une barre (7) de polarisation à la masse et de dissipation thermique au moins partiellement immergée à l'intérieur dudit mélange (3a, 3b), mais espacée desdites électrodes polarisées (5), (6) et branchée, en fonctionnement, à un système de mise à la masse (101) ;
**caractérisé en ce que** ledit noyau (3) amortisseur de syntoniseur interne est inséré dans une enveloppe dédiée (12, 15) en matériau diélectrique et détermine une première chambre à haute fréquence, HF, ledit appareil (1) comprenant de plus un noyau (8) amortisseur de syntoniseur externe bordant le noyau (3) amortisseur de syntoniseur interne et étant intégré à ce dernier ; ledit noyau (8) amortisseur de syntoniseur externe étant disposé à l'extérieur du noyau (3) amortisseur de syntoniseur interne de sorte qu'il est interposé entre l'enveloppe externe (4), qui est de préférence métallique, et le noyau (3) amortisseur de syntoniseur interne de manière à déterminer une deuxième chambre à haute fréquence, HF ; ledit noyau (8) amortisseur de syntoniseur externe comprenant un mélange d'un sédiment sous forme incohérente (8a), non hygroscopique, de particules d'un matériau piézoélectrique, pyroélectrique et éventuellement semi-conducteur et éventuellement inerte réfractaire, dans l'air, configuré pour détecter et transformer l'énergie électromagnétique à l'origine des phénomènes de perturbation en énergie mécanique et thermique.

2. Appareil (1) selon la revendication 1, **caractérisé en ce que** ledit noyau (3) amortisseur de syntoniseur interne comprend ledit mélange de sédiment consolidé (3a).

3. Appareil (1) selon la revendication 2, **caractérisé en ce que** ledit noyau (3) amortisseur de syntoniseur interne comprend deux desdits mélanges de sédiment consolidé (3a) étant séparés l'un de l'autre, la première électrode polarisée (5) étant partiellement insérée à l'intérieur d'un premier desdits mélanges (3a₁) et la deuxième électrode polarisée (6) étant partiellement insérée à l'intérieur d'un deuxième desdits mélanges (3a₂) ; la barre (7) de polarisation à la masse et de dissipation thermique étant en contact avec les deux mélanges de sédiment consolidé (3a).

4. Appareil (1) selon la revendication 2 ou 3, **caractérisé en ce que** ledit noyau (3) amortisseur de syntoniseur interne comprend un anneau métallique (9) qui couronne et comporte un mélange respectif de sédiment consolidé (3a) de manière à établir un contact périphérique solide ; ledit anneau métallique (9) présentant un branchement électrique pour ladite première électrode polarisée (5) ou ladite deuxième électrode polarisée (6).

5. Appareil (1) selon l'une quelconque des revendications 2 à 4, **caractérisé en ce que** ledit noyau (3) amortisseur de syntoniseur interne est amélioré **en ce qu'**il comprend deux paires desdits mélanges de sédiment consolidé (3a), dans lequel, une paire est séparée de l'autre et dans lequel la première électrode polarisée (5) est partiellement insérée à l'intérieur d'un desdits mélanges (3a) appartenant à une première paire et la deuxième électrode polarisée (6) est partiellement insérée à l'intérieur d'un desdits mélanges (3a) appartenant à une deuxième paire ; éventuellement, chacun desdits mélanges (3a) des deux paires peut être réalisé avec une composition singulière qui est à la fois chimico-physique et avec une taille de particule de clastes, c'est-à-dire les particules, et par des pourcentages volumétriques réciproques ; lesdits mélanges (3a) de chaque paire étant en contact l'un avec l'autre et étant branchés électriquement au moyen d'un fil de pont électrique (14) ; ladite barre (7) de polarisation à la masse et de dissipation thermique étant en contact avec les deux paires desdits mélanges (3a) de sédiment consolidé.

6. Appareil (1) selon l'une quelconque des revendications 2 à 5, **caractérisé en ce qu'**il comprend une gaine (12) en matériau diélectrique qui s'adapte de manière dédiée audit noyau (3) amortisseur de syntoniseur interne déterminant ladite première chambre principale à haute fréquence (HF).

7. Appareil (1) selon la revendication 1, **caractérisé en ce que** ledit noyau (3) amortisseur de syntoniseur interne est enfermé dans une enveloppe (15) de matériau diélectrique contenant ledit mélange sous forme de sédiment incohérent (3b), étant dissous ou non consolidé.

8. Appareil (1) selon la revendication 7, **caractérisé en ce que** ladite première électrode polarisée (5) est partiellement insérée à l'intérieur dudit mélange sous forme de sédiment incohérent (3b) et ladite deuxième électrode polarisée (6) est partiellement insérée à l'intérieur du même mélange sous forme de sédiment incohérent (3b) et étant espacée de la première électrode polarisée (5) de sorte qu'elles ne sont pas en contact l'une avec l'autre ; ladite barre (7) de polarisation à la masse et de dissipation thermique étant en contact avec ledit mélange sous forme de sédiment incohérent (3b) .

9. Appareil (1) selon l'une des revendications 7 ou 8, **caractérisé en ce que** ladite enveloppe (15) dudit mélange sous forme de sédiment incohérent (3b) comprend quatre électrodes internes contiguës à l'enveloppe (15), de préférence à géométrie hémisphérique, couplées deux à deux (5a-5b) et (6a-6b), par branchement électromécanique et correspondant aux deux électrodes polarisées (5) et (6) respectives, de manière à augmenter le travail du mélange (3b) d'absorption, d'amortissement et de dissipation de l'énergie électromagnétique perturbatrice provenant du système d'alimentation électrique (100).

10. Appareil (1) selon la revendication 9, **caractérisé en ce que** chacun desdits deux branchements électromécaniques est réalisé avec une bande/plaque métallique (16) contiguë à la surface interne de l'enveloppe (15).

11. Appareil (1) selon l'une quelconque des revendications 7 à 10, **caractérisé en ce que** le noyau (3) amortisseur de syntoniseur sous forme de mélange de sédiment incohérent (3b) est amélioré **en ce qu'**il comprend une première sous-unité d'amortisseur de syntoniseur branchée à la première électrode polarisée (5), partiellement insérée dans ledit mélange (3b), et contenue dans l'enveloppe (15a), en matériau diélectrique, de préférence cylindrique, et branchée à l'entrée de phase (2a) de manière à définir ladite chambre à haute fréquence (HF) ; ledit mélange de sédiment incohérent (3b) comprenant une deuxième sous-unité d'amortisseur de syntoniseur branchée à la deuxième électrode polarisée (6), partiellement insérée dans ledit mélange, et contenue dans l'enveloppe (15b), en matériau diélectrique, de préférence cylindrique, et branchée à l'entrée neutre (2b) définissant ladite chambre à haute fréquence (HF).

12. Appareil (1) selon l'une quelconque des revendications 7 à 11, **caractérisé en ce que** lesdites enveloppes (15a et 15b) desdits mélanges sous forme de sédiments incohérents (3b) comprennent chacune quatre électrodes internes (5a, 5b, 5c, 5d) et (6a, 6b, 6c, 6d), de préférence à géométrie hémisphérique, reliées entre elles par un branchement électromécanique, respectivement des électrodes internes (5a-5b-5c-5d) reliées à la première électrode polarisée (5) et contiguës à l'enveloppe (15a), et des électrodes internes (6a-6b-6c-6d) reliées à la deuxième électrode polarisée (6) et contiguës à l'enveloppe (15b), de manière à augmenter le travail desdits mélanges (3b) d'absorption, d'amortissement et de dissipation de l'énergie électromagnétique perturbatrice provenant du système d'alimentation électrique (100).

13. Appareil (1) selon la revendication 12, **caractérisé en ce que** chacun de ces deux branchements électromécaniques des électrodes internes (5a-5b-5c-5d), (6a-6b-6c-6d) est réalisé avec une bande/plaque métallique (16) contiguë à la surface interne des enveloppes (15a, 15b) respectives.

14. Appareil (1) selon l'une quelconque des revendications précédentes, **caractérisé en ce qu'**il comprend un connecteur électrique (13) comportant trois contacts électriques respectivement branchés à l'entrée de phase (2a), à l'entrée neutre (2b) et à ladite barre (7) de polarisation à la masse et de dissipation thermique ; ledit connecteur électrique (13) étant façonné pour se coupler à une fiche électrique pouvant être branchée au système d'alimentation électrique (100), par l'intermédiaire d'un conducteur électrique blindé dédié, afin de recevoir ledit signal de tension électrique.

15. Appareil (1) selon l'une quelconque des revendications précédentes, **caractérisé en ce que** ladite enveloppe externe (4) est en métal et comporte une surface externe à ailettes (18) de manière à définir, dans son ensemble, des propriétés d'anti-interférence électromagnétique positive, c'est-à-dire constructive, d'anti-effet pelliculaire et de conductivité thermique élevée.

16. Appareil (1) selon la revendication 15, **caractérisé en ce que** ladite enveloppe externe (4) comprend un recouvrement (4a) sur lequel est superposée une plaque (21), toutes deux de préférence métalliques, et qui est amovible pour accéder à des trous (22) d'inspection et de rechargement du mélange sous forme de sédiment incohérent (8a), étant dissous ou non consolidé, définissant le noyau externe (8) et/ou pour l'insertion et le branchement d'un fusible et/ou d'une lampe de signalisation lumineuse adaptée pour signaler la continuité du fonctionnement, et qui sont branchés en fonction des polarités du système d'alimentation électrique (100).

17. Appareil (1) selon l'une quelconque des revendications 15 à 16, **caractérisé en ce que** ladite enveloppe externe (4) est en alliage d'aluminium et que la couleur de la surface externe (18) de l'enveloppe externe (4) peut varier entre cyan et violet, notamment bleu, indigo, sans épuiser les options, afin d'intégrer et d'étendre le spectre des fréquences de manière à obtenir l'interaction maximale de l'appareil (1) dans son ensemble avec les phénomènes incidents.

18. Appareil (1) selon l'une quelconque des revendications 15 à 17, **caractérisé en ce que** ladite enveloppe externe (4) comprend une base (20) agissant comme un terminal de l'appareil (1) et autoportant le même appareil (1), et de préférence en granit sur laquelle ladite enveloppe externe (4) est solidement interconnectée.

19. Appareil (1) selon la revendication 18, **caractérisé en ce que** ladite base (20) en granit a une surface externe cylindrique ciselée en haut relief.

20. Appareil (1) selon l'une quelconque des revendications précédentes, **caractérisé en ce qu'**il est configuré de manière à agir, en tant qu'unité fonctionnelle, également comme une antenne passive omnidirectionnelle multigamma conçue pour recevoir des rayonnements électromagnétiques concentrés et intenses et, par réaction, partiellement les réfléchir de manière répartie et partiellement à les réfracter, dont l'énergie est réfractée de différentes façons, de manière à absorber, amortir et dissiper les impacts et les vibrations électriques, c'est-à-dire les charges électriques.

21. Appareil (1) selon l'une quelconque des revendications précédentes, **caractérisé en ce qu'**il est conformé et configuré pour neutraliser la pollution électromagnétique locale, l'électrosmog, à proximité des appareils et systèmes audio et/ou vidéo, en particulier à haute-fidélité (Hi-Fi), et à haute-fidélité haut de gamme (Hi-Fi haut de gamme), en conservant la capacité intrinsèque et exclusive de garantir la sécurité.

22. Système d'alimentation électrique, comprenant :
- un système d'alimentation électrique (100) à basse tension ou très basse tension, comprenant au moins un conducteur électrique de phase et un conducteur électrique neutre ;
- au moins un appareil/système de reproduction audio et/ou vidéo branché au système d'alimentation électrique (100) à alimenter ;
**caractérisé en ce qu'**il comprend un appareil (1) selon l'une quelconque des revendications précédentes, dans lequel l'entrée de phase (2a) est branchée par dérivation dudit conducteur électrique de phase, et ladite entrée neutre (2b) est branchée par dérivation dudit conducteur électrique neutre.

23. Procédé permettant d'éviter les altérations et les distorsions audio et/ou vidéo d'origine externe et interne aux systèmes d'alimentation électrique (100) à basse ou très basse tension, en courant alternatif ou continu, d'un appareil/système de reproduction audio et/ou vidéo branché au même système d'alimentation électrique (100) ;
**caractérisé en ce qu'**il relie au moins un appareil (1) réalisé selon l'une quelconque des revendications 1 à 21 par dérivation dudit système d'alimentation électrique (100) et à proximité dudit appareil/système de reproduction audio et/ou vidéo.
